# EUROPÄISCHE PATENTSCHRIFT

(11) **EP 0 596 066 B1**
(45) Veröffentlichungstag und Bekanntmachung des Hinweises auf die Patenterteilung: **28.02.1996**
(21) Anmeldenummer: 93909851.3
(22) Anmeldetag: 28.04.1993
(51) Int. Cl.: F16H 59/10, G05G 5/02

(54) **VERRIEGELUNGSVORRICHTUNG FÜR EINEN WÄHLHEBEL EINES KRAFTFAHRZEUGGETRIEBES**
LOCKING DEVICE FOR AN AUTOMOBILE GEAR-SELECTOR LEVER
DISPOSITIF DE BLOCAGE DU LEVIER SELECTEUR D'UNE BOITE DE VITESSES DE VEHICULE AUTOMOBILE

(30) Priorität: 27.05.1992 DE 4217500
(43) Veröffentlichungstag der Anmeldung: 11.05.1994
(73) Patentinhaber: Dr.Ing.h.c. F. Porsche Aktiengesellschaft, D-70435 Stuttgart (DE)
(72) Erfinder: PLOCHER, Bernd, D-7407 Rottenburg (DE)
(86) Internationale Anmeldenummer: EP9301021
(87) Internationale Veröffentlichungsnummer: WO9324771

(56) Entgegenhaltungen:
- EP-A- 0 246 353
- DE-A- 3 836 237
- US-A- 5 181 592

## Beschreibung

Die Erfindung betrifft eine Verriegelungsvorrichtung gemäß dem Oberbegriff des Patentanspruches 1.

Aus der DE-A-38 36 237 ist eine gattungsgemäße Verriegelungsvorrichtung bekannt, bei der ein Wählhebel in vorbestimmten Stellungen verriegelbar ist. Der Wählhebel ist mit einem manuell zu verschiebenden Sperrstift versehen, der durch einen Elektromagneten, der mit einer elektronischen Schaltung verbunden ist. und ein mit diesem zusammenwirkendes Gesperre blockiert werden kann. Der Elektromagnet hat dazu einen Tauchanker, der mit einem Sperrhebel zusammenwirkt. Beim Bestromen des Elektromagneten wird der Sperrhebel über den Tauchanker des Elektromagneten in eine Stellung bewegt, in der der mit dem Wählhebel zusammenwirkende Sperrstift verriegelt ist, so daß eine Bewegung des Wählhebels nicht möglich ist. Eine derartige Ausbildung von Elektromagneten und Sperrhebel erfordert einen erheblichen Einbauraum und ist relativ schwer. Darüberhinaus kann es zu Schwierigkeiten bei der Verriegelung des Sperrstiftes in den entsprechenden Stellungen des Wählhebels kommen.

Aus der EP-A-0 307 846 ist weiterhin eine Verriegelungsvorrichtung bekannt, bei der ein an seinem oberen Ende mit einer manuell zu betätigenden Taste versehener Wählhebel in vorbestimmten Stellungen verriegelbar ist. Hierfür ist der Wählhebel mit einem quer zur Schwenkrichtung verlaufenden, mittels der Taste in axialer Richtung des Wählhebels verschiebbaren Sperrstift versehen, welcher in den Wählhebelstellungen zugeordneten Vertiefungen einer Kulisse eingreift. Von einem elektrisch betätigten Hubmagneten wird in bestimmten Wählhebelstellungen ein aus einem Sperrhebel bestehendes Gesperre in die Bewegungsbahn des Sperrstiftes bewegt. Der Wählhebel ist verriegelt und kann nicht verschwenkt werden, da der Sperrstift formschlüssig in der Vertiefung der Kulisse blockiert ist. Nachteilig bei einer solchen Ausführung ist die bauraumbeanspruchende Anordnung von Hubmagnet und Gesperre. Weiterhin sind die für eine sichere Verriegelung und Entriegelung benötigten Hubmagnete schwergewichtig und teuer.

Der Erfindung liegt die Aufgabe zugrunde, eine Verriegelungvorrichtung für den Wählhebel eines Kraftfahrzeuggetriebes zu schaffen, welche einen geringen Bauraum beansprucht, geringe Kosten verursacht und in den entsprechenden Stellungen des Wählhebels eine sichere Verriegelung ermöglicht.

Die Lösung dieser Aufgabe gelingt mit den Merkmalen des Patentanspruches 1. Vorteilhafte Ausgestaltungen der Erfindungen sind in den Unteransprüchen gekennzeichnet.

Vorteilhafte Ausgestaltungen der Erfindungen sind in den Unteransprüchen gekennzeichnet.

Die Anordnung einer aus einem Haftmagneten und einer beweglichen Sperrplatte bestehenden elektromagnetischen Kupplung an dem Wählhebel ermöglicht eine einfache, kompakte Bauweise der Verriegelungsvorrichtung. Im bestromten Zustand haftet die Sperrplatte mittels einer elektromagnetischen Haltekraft an dem Haftmagneten. Dabei ist der Sperrstift des Wählhebels durch die Sperrplatte blockiert. Der Haftmagnet ist ein handelübliches Bauteil, welches preisgünstig ist und aufgrund der geringen Baugröße in den Wählhebel integriert werden kann. Anstelle des einzelnen Haftmagneten kann als Baueinheit ein Klappankermagnet Verwendung finden, an dessen Haftmagnet der als Sperrplatte wirkende Klappanker befestigt ist.

Die Verriegelungsvorrichtung ist vollständig in dem Wählhebel integriert und gemeinsam mit ihm verschwenkbar. Mittels der elektronischen Schaltung kann die Kupplung in jeder beliebigen Wählhebelstellung geschlossen werden. Ein mit dieser Vorrichtung versehender Wählhebel kann somit an verschiedene gesetzgeberische Erfordernisse und an verschiedene Fahrzeugtypen angepasst werden.

Ein bevorzugtes Anwendungsgebiet sind Wählhebel für automatische Kraftfahrzeuggetriebe, jedoch ist diese Vorrichtung auch als Sperre für den Rückwärtsgang eines Handschaltgetriebes anwendbar. Weiterhin kann diese Verriegelung bei Wählhebeln eingesetzt werden, die in parallelen Schaltgassen einer H-förmigen Schaltung bewegbar sind, wobei in einer Gasse die für Automatikgetriebe üblichen Wählhebelstellungen anwählbar sind, während in der parallelen Gasse einzelne Gänge manuell eingelegt werden können.

Vorteilhaft ist eine Ausgestaltung, bei der die Sperrplatte um eine Kippachse bewegbar angeordnet ist. Bei bestromtem Haftmagnet kann die Kupplung somit durch eine einfache, reibungsarme Bewegung um die Kippachse schließen.

Um in einfacher Weise eine ausreichend große, der Haltekraft entgegenwirkende Lösekraft zu erzeugen, ist die Sperrplatte bzw. eine mit dem Sperrstift verbundene Lasche jeweils mit einer winkelig angeordneten Keilfläche versehen, welche sich bei geschlossener Kupplung gegenüberstehen. Diese winkelige Anordnung gewährleistet ein sicheres Entriegeln auch unter einer Vorlast, d.h. wenn auf eine manuell zu betätigende Taste des Wählhebels eine Kraft ausgeübt wird.

In Abhängigkeit von den jeweils herrschenden baulichen Verhältnissen kann die Kippachse der Sperrplatte parallel oder senkrecht zu der Achse angeordnet sein, um die der Wählhebel schwenkbar ist.

Ausführungsbeispiele der Erfindung werden nachfolgend anhand einer Zeichnung erläutert.

Es zeigen:

- Fig. 1 A: einen Schnitt durch einen Wählhebel entlang der Linie I-I gemäß Fig. 1B,
- Fig. 1 B: einen Schnitt durch einen Wählhebel,
- Fig. 2 A bis 2 B: schematisch eine erste Ausführungsform der Erfindung, teilweise geschnitten und mit einer um 90° gedreht gezeichneten Kupplung,
- Fig. 3 A bis 3 C: eine Fig. 1A, 1B ähnliche Darstellung einer zweiten Ausführungsform,
- Fig. 4 A bis 4 B: eine Fig. 1A, 1B ähnliche Darstellung einer dritten Ausführungsform und
- Fig. 5: eine perspektivische Ansicht einer erfindungsgemäßen Verriegelungsvorrichtung.

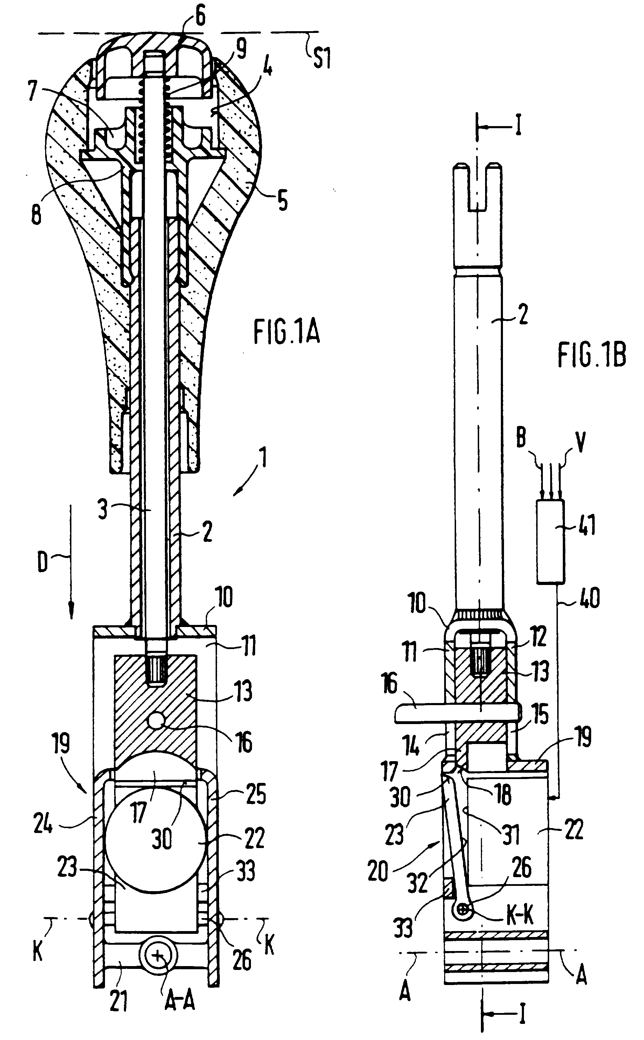

Ein in einem nicht gezeigten Kraftfahrzeug eingebauter, manuell um eine Achse A-A schwenkbarer, mit einem nicht gezeigten Getriebe zusammenwirkender Wählhebel 1 weist gemäß Figur 1 ein Rohr 2 mit einer darin verschiebbar geführten Stange 3 auf. In ein am oberen Ende mit einer Ausnehmung 4 versehenes, auf das Rohr 2 aufgesetztes Handstück 5 ist eine manuell zu betätigende Taste 6 eingesetzt, welche fest mit der Stange 3 verbunden ist. Des weiteren ist in die Ausnehmung 4 zwischen Handstück 5 und Rohr 2 eine mit einem Teller 7 versehene Hülse 8 eingepresst, die von der Stange 3 durchdrungen wird. Auf dem Teller 7 stützt sich eine Druckfeder 9 ab, welche an der Taste 6 angreift und diese in einer ersten, nicht betätigten Stellung S1 hält.

Das Rohr 2 ist auf einen U-förmigen Bügel 10 aufgesetzt, zwischen dessen Schenkeln 11 und 12 eine mit der Stange 3 verbundene und gemeinsam mit ihr in eine Bewegungsrichtung D verschiebbare Lasche 13 geführt ist. In diese Lasche 13 ist ein quer zum Wählhebel 1 verlaufender, beide Schenkel 11, 12 in Schlitzen 14, 15 durchdringender Sperrstift 16 eingesetzt. Die Lasche 13 weist eine abwärts gerichtete Zunge 17 auf, welche endseitig mit einer winkelig angeordneten, ersten Keilfläche 18 versehen ist.

Der Bügel 10 ist auf ein U-förmiges Gehäuse 19 aufgesetzt, welches eine elektromagnetische Kupplung 20 umgreift und an seinem unteren Ende eine den Wählhebel 1 haltende Lagerung 21 aufweist.

Die Kupplung 20 wird aus einem als Haftmagnet 22 ausgebildeten Elektromagneten und einem als Sperrplatte 23 ausgebildeten Gesperre gebildet. Diese Sperrplatte 23 ist auf einem sich zwischen Seitenwänden 24 und 25 des Gehäuses 19 erstreckenden, eine Kippachse K-K aufweisenden Bolzen 26 beweglich gelagert. Diese Kippachse K-K verläuft beabstandet rechtwinkelig zur Achse A-A und senkrecht zur Bewegungsrichtung D.

An ihrer dem Bügel 10 zugewandten Oberseite weist die Sperrplatte 23 eine mit der ersten Keilfläche 18 korrespondierende, winkelig angeordnete zweite Keilfläche 30 auf.

Der Haftmagnet 22 ist auf seiner der Sperrplatte 23 zugewandten Seite mit einer Haftfläche 31 versehen, die Sperrplatte 23 weist eine korrespondierende Haftseite 32 auf.

Ein sich parallel zum Bolzen 26 erstreckender Anschlag 33 begrenzt eine Kippbewegung der Sperrplatte 23.

Der Haftmagnet 22 ist über eine Leitung 40 mit einer elektronischen Schaltung 41 verbunden, welche unter anderem ein bei der Betätigung einer nicht gezeigten Fußbremse des Kraftfahrzeuges ausgelöstes Bremssignal B und ein von der Fahrgeschwindigkeit abhäniges Signal V aufnimmt.

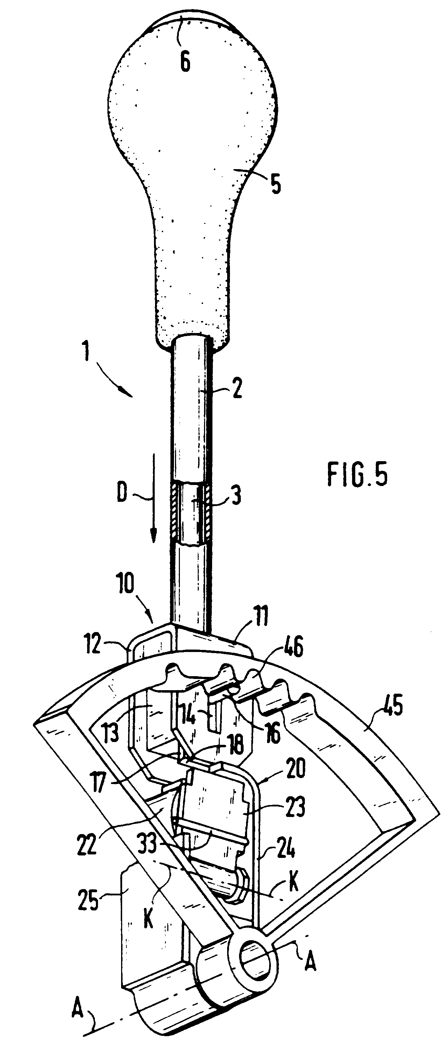

Figur 5 zeigt den zuvor beschriebenen Wählhebel 1 im Zusammenwirken mit einer Kulisse 45, welche dem Sperrstift 16 zugeordnete, als Vertiefungen 46 ausgebildete Rastierungenn aufweist. Die Kulisse 45 ist ortsfest im Kraftfahrzeug angeordnet, wobei die Vertiefungen 46 vorbestimmten Stellungen des Wählhebels 1 zugeordnet sind. Zur Verdeutlichung der Anordnung ist die Seitenwand 25 teilweise gebrochen dargestellt.

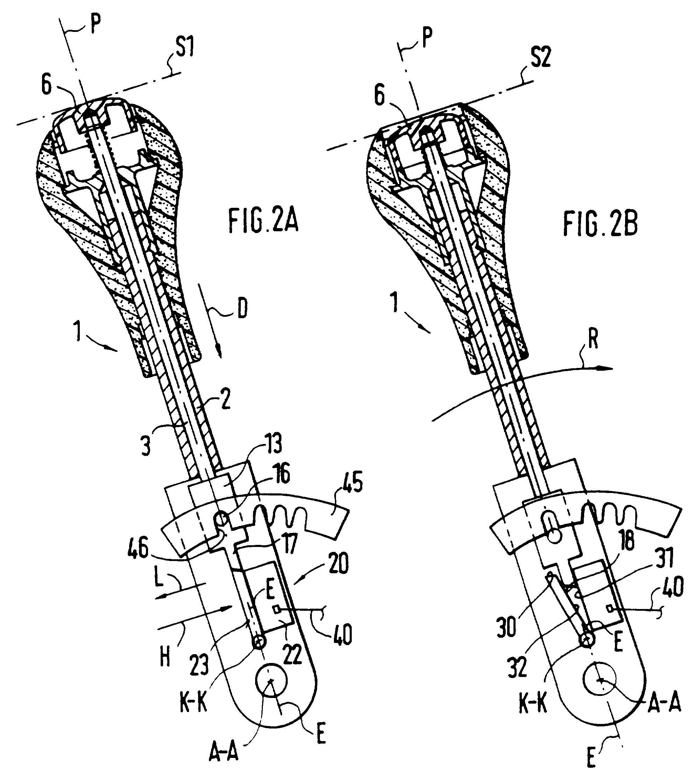

In den Figuren 2, 3 und 4 sind schematisch verschiedene Ausführungsformen der Erfindung dargestellt. Zum besseren Verständnis der Funktionsweise ist die Kupplung 20 jeweils um 90° Grad gedreht dargestellt. Hierbei verläuft die Kippachse K-K parallel zur Achse A-A. Beide Achsen A-A, K-K liegen in einer zur Bewegungsrichtung D parallelen Ebene E-E.

Die in den Figuren 2A und 2B gezeigte erste Ausführungsform zeigt den Wählhebel 1 in einer Stellung P, in der das Getriebe in einer Parkstellung gehalten ist.

Der Haftmagnet 22 wird von der Schaltung 41 bestromt und verursacht eine elektromaqnetische Haltekraft H, welche senkrecht auf den Haftmagneten 22 wirkt und die Haftseite 32 der Sperrplatte 23 in Anlage mit der Haftfläche 31 hält. Die Taste 6 befindet sich in Stellung S1 und die Druckfeder 9 hält über die Stange 3 den Sperrstift 16 in der der Stellung P zugeordneten Vertiefung 46.

Die Taste 6 kann manuell nicht in eine betätigte, zweite Stellung S2 gedrückt werden, da die Zunge 17 durch die Sperrplatte 23 blockiert ist. Somit ist der Wählhebel 1 in der Stellung P verriegelt.

Eine in Bewegungsrichtung D auf die Taste 6 wirkende Kraft verursacht über die winkelige Anordnung der Keilflächen 18 und 30 eine auf die Sperrplatte 23 wirkende Lösekraft L, welche kleiner ist als die Haltekraft H und entgegengesetzt zu ihr wirkt.

Liegt nun zusätzlich das Bremssignal B an der Schaltung 41 an, wird die Stromzufuhr über die Leitung 40 unterbrochen und die Haltekraft H entfällt. Taste 6 bewegt sich gemäß Figur 2B in Stellung S2, wobei die in Richtung D verschobene Zunge 17 die Sperrplatte 23 um die Kippachse K-K so bewegt, daß die Zunge 17 zwischen Haftfläche 31 und Haftseite 32 gelangt. Sperrstift 16 befindet sich außer Eingriff mit der parallele Flanken aufweisenden Vertiefung 46. Der Wählhebel 1 kann bei Betätigen der Taste 6 um die Achse A-A rotatorisch in eine Bewegungsrichtung R verschwenkt werden.

Bei einem Ausfall der Kupplung 20 oder der Schaltung 41 bleibt die Verschwenkbarkeit des Wählhebels 1 und die zwischen Sperrstift 16 und Vertiefung 46 erzielte Rastierung erhalten.

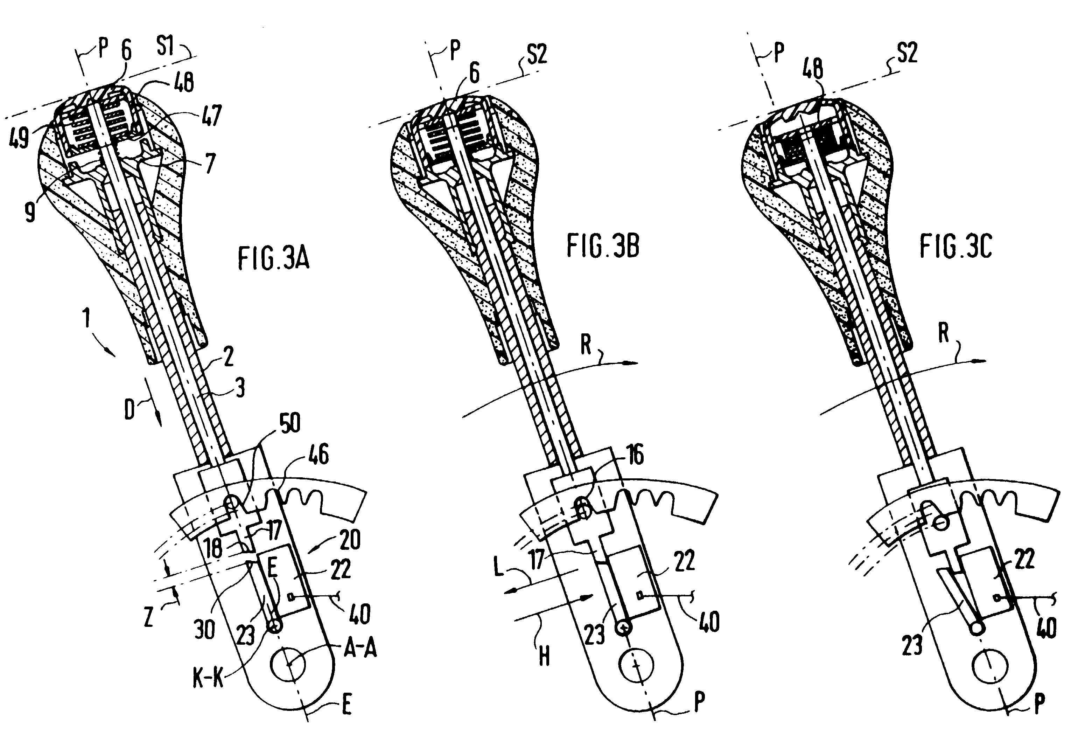

Die in den Figuren 3A bis 3C gezeigte zweite Ausführungsform der Erfindung weist eine gegenüber der Stange 3 bewegliche Taste 6 auf. Zwischen einem Boden 47 der Taste 6 und einem an der Stange 3 befestigten Federteller 48 stützt sich eine Schraubenfeder 49. Die Druckfeder 9 wirkt zwischen Teller 7 und Boden 47.

Die Vertiefung 46 ist mit einer schrägen Flanke 50 versehen. Im bestromten Zustand der Kupplung 20 ist der Wählhebel 1 verriegelt, die Keilflächen 18 und 30 sind um ein Maß Z zueinander beabstandet.

Zum Verlassen der Stellung P wird gemäß Figur 3B die Taste 6 entgegen der Druckfeder 9 in Stellung S2 gedrückt. Dabei wird der Sperrstift 16 um das Maß Z in Richtung D verschoben, die Keilflächen 18 und 30 stehen sich berührungsfrei unmittelbar gegenüber. Ein weiteres Drücken der Taste 6 ist nicht möglich, da die Taste 6 auf dem Teller 7 aufliegt. Durch Betätigen der Fußbremse unterbricht das Signal B die Bestromung des Haftmagneten 22. Ein Verlassen der Stellung P ist nun durch Ziehen am Wählhebel in Richtung R möglich. Dabei wird der Sperrstift 16 an der Flanke 50 gleitend in Richtung D die Sperrplatte 23 lösend verschoben. Durch diese Verschiebung wird die Schraubenfeder 49 zwischen Boden 47 und Federteller 48 verspannt, ein weiteres Betätigen der Taste 6 ist nicht erforderlich. Der Wählhebel 1 kann gemäß Figur 3C die Stellung P verlassen.

Ein Mißbrauch der Verriegelungsvorrichtung gemäß Figur 3 dahingehend, daß bei ständig in Stellung S2 gedrückter Taste 6 der Wählhebel 1 in beliebige Stellungen verschwenkt werden kann und die Kupplung 20 dabei aufgrund der vor dem Haftmagnet 22 stehenden Zunge 17 nicht schließen kann, ist ausgeschlossen, weil durch die Tastenbetätigung lediglich der Abstand Z zwischen den Keilflächen 18, 30 überwunden werden kann. Sobald eine weitere Vertiefung 46 der Kulisse 45 erreicht ist, verschiebt die Schraubenfeder 49 die Zunge 13 entgegen der Richtung D soweit, daß die Kupplung 20 unabhängig von der Tastenbetätigung schließen kann.

Weiterhin vorteilhaft bei dieser Ausführungsform ist die Tatsache, daß die Kupplung 20 auch bei einer am Wählhebel 1 in Richtung R wirkenden Kraft öffnen kann. Dieses ist der Fall, wenn in Unkenntnis der Verriegelungsvorrichtung mit dieser Kraft am Wählhebel 1 gezogen wird, um z.B. die verriegelte Stellung P bei nicht betätigter Fußbremse zu verlassen. Wird dann bei weiter wirkender Kraft das Signal B ausgelöst, bewirkt die über die Flanke 50 auf den Sperrstift 16 und somit auf die Sperrplatte 23 wirkende Lösekraft L ein sofortiges Öffnen der Kupplung 20.

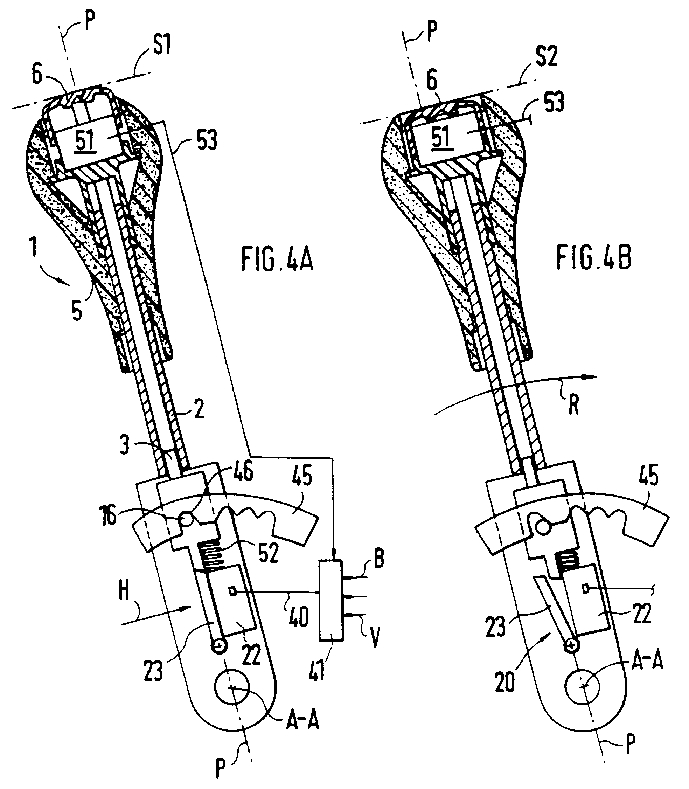

Die dritte Ausführungsform gemäß der Figuren 4A und 4B weist einen auf dem Teller 7 befestigten elektrischen Schalter 51 auf, welcher von der Taste 6 betätigt wird. Die Stange 3 ist kurz ausgeführt und dient nur der Führung der Lasche 13 im Rohr 2.

Zwischen Haftmagnet 22 und Lasche 13 ist eine Druckfeder 52 angeordnet. Der Schalter 51 ist über eine Leitung 53 mit der Schaltung 41 verbunden.

Im fahrbereiten Zustand des Kraftfahrzeuges ist der Haftmagnet 22 ständig bestromt. Ein Drücken der Taste 6 in die Stellung S2 löst über den Schalter 51 ein Signal aus, welches über die Leitung 53 übertragen wird und die Stromzufuhr unterbricht. Die Druckfeder 52 hält den Sperrstift 16 in der Vertiefung 46. In der Stellung P des Wählhebels 1 ist zur Unterbrechung der Stromzufuhr zusätzlich das Bremssignal B erforderlich. Anschließend kann der Wählhebel 1 in Richtung R verschwenkt werden, wobei mittels Flanke 50 die Lasche 13 gemäß Figur 4B die Kupplung 20 öffend verschoben wird.

Durch den Entfall der mechanischen Verbindung zwischen Taste 6 und Lasche 13 ist eine beliebige Gestaltung des Wählhebels 1 möglich.

Allen Ausführungsformen gemeinsam ist der Vorteil, daß sie unter einer über die Taste 6 eingebrachten Vorlast auf die Verriegelungsvorrichtung sicher entriegeln.

## Patentansprüche

1. Verriegelungsvorrichtung für einen Wählhebel (1) eines Kraftfahrzeuggetriebes, mit einem manuell zu verschiebenden Sperrstift (16), welcher quer zu dem um eine Achse (A-A) schwenkbaren Wählhebel (1) verlaufend angeordnet ist, und mit einem Elektromagneten, welcher mit einer elektronischen Schaltung (40) verbunden ist und ein Gesperre bewegt, das den Sperrstift (16) blockiert und damit den Wählhebel (1) verriegelt, **dadurch gekennzeichnet,** daß eine aus dem als Haftmagneten (22) ausgebildeten Elektromagneten und dem als Sperrplatte (23) ausgebildeten Gesperre bestehende elektromagnetische Kupplung (20) in den Wählhebel (1) integriert und mit diesem schwenkbar ist, und daß in bestromtem Zustand der Haftmagnet (22) mittels einer elektromagnetischen Haltekraft (H) die Sperrplatte (23) und damit den Sperrstift (16) blockiert.

2. Vorrichtung nach Anspruch 1, **dadurch gekennzeichnet,** daß die Sperrplatte (23) auf einer benachbart zu dem Haftmagnet (22) angeordneten Kippachse (K-K) bewegbar angeordnet ist.

3. Vorrichtung nach Anspruch 2, **dadurch gekennzeichnet,** daß der Sperrstift (16) unter Zwischenschaltung einer gemeinsam mit verschiebbaren, mit einer ersten Keilfläche (18) versehenen Lasche (13) in Anlage mit einer korrespondierenden zweiten Keilfläche (30) der Sperrplatte (23) bringbar ist, wobei die Keilflächen (18, 30) winkelig eine entgegen der Haltekraft (H) gerichtete Lösekraft (L) verursachend angeordnet sind.

4. Vorrichtung nach Anspruch 3, **dadurch gekennzeichnet,** daß die Kippachse (K-K) parallel zur Achse (A-A) verlaufend angeordnet ist.

5. Vorrichtung nach Anspruch 3, **dadurch gekennzeichnet,** daß die Kippachse (K-K) und die Achse (A-A) in einer zur Bewegungsrichtung (D) des Sperrstiftes (16) parallel verlaufenden Ebene (E-E) angeordnet sind.

6. Vorrichtung nach Anspruch 3, **dadurch gekennzeichnet,** daß die Kippachse (K-K) rechtwinkelig zur Achse (A-A) verlaufend angeordnet ist.

7. Vorrichtung nach Anspruch 6, **dadurch gekennzeichnet,** daß die Achse (A-A) senkrecht zur Bewegungsrichtung (D) verlaufend angeordnet ist.

8. Vorrichtung nach den Ansprüchen 4 oder 6, **dadurch gekennzeichnet,** daß der Sperrstift (16) mittels einer Taste (6) manuell innerhalb einer als Rastierung wirkenden Vertiefung (46) einer fahrzeugfesten Kulisse (45) verschiebbar ist, wobei die Vertiefung (46) parallele Flanken aufweist.

9. Vorrichtung nach Anspruch 8, **dadurch gekennzeichnet,** daß bei in eine betätigte, zweite Stellung (S2) gedrückter Taste (6) eine Zunge (17) der Lasche (13) zwischen Sperrplatte (23) und Haftmagnet (22) der geöffneten Kupplung (20) steht und der Sperrstift (16) außer Eingriff mit der Kulisse (45) angeordnet ist.

10. Vorrichtung nach den Ansprüchen 4 oder 6, **dadurch gekennzeichnet,** daß der Sperrstift (16) mittels einer Taste (6) manuell verschiebbar ist und bei in eine betätigte, zweite Stellung (S2) gedrückter Taste (6) die erste Keilfläche (18) berührungsfrei unmittelbar benachbart der zweiten Keilfläche (30) angeordnet ist und der Sperrstift (16) dabei in Anlage mit einer schrägen Flanke (50) einer als Rastierung wirkenden Vertiefung (46) einer fahrzeugfesten Kulisse (45) steht.

11. Vorrichtung nach Anspruch 10, **dadurch gekennzeichnet,** daß bei Verschwenken des Wählhebels (1) um die Achse (A-A) der Sperrstift (16) gleitend an der Flanke (50) die Lösekraft (L) verursachend anliegt.

12. Vorrichtung nach den Ansprüchen 4 oder 6, **dadurch gekennzeichnet,** daß bei geschlossener Kupplung (20) der Sperrstift (16) von einer an der Lasche (13) angreifenden Druckfeder (52) in einer als Rastierung wirkenden Vertiefung (46) einer fahrzeugfesten Kulisse (45) gehalten ist.

13. Vorrichtung nach Anspruch 12, **dadurch gekennzeichnet,** daß an dem Wählhebel (1) ein über eine Leitung (53) mit der Schaltung (40) verbundener, manuell zu betätigender Schalter (51) angeordnet ist, welcher in betätigter Stellung die Stromzufuhr zur Kupplung (20) unterbricht.

## Claims

1. A locking device for a selector lever (1) of a motor-vehicle transmission, with a manually displaceable locking pin (16) extending transversely to the selector lever (1) pivotable about an axis **(A-A),** and with an electromagnet connected to an electronic circuit (40) and moving a catch which blocks the locking pin (16) and thus locks the selector lever (1), **characterized in that** an electromagnetic coupling (20) comprising the electromagnet in the form of a clamping magnet (22) and the catch in the form of a locking plate (23) is integrated in the selector lever (1) and is pivotable therewith, and when current flows therethrough the clamping magnet (22) blocks the locking plate (23) and thus the locking pin (16) by means an electromagnetic holding force **(H).**

2. A device according to Claim 1, **characterized in that** the locking plate (23) is mounted movably on a tilting axis **(K-K)** situated adjacent the clamping magnet (22).

3. A device according to Claim 2, **characterized in that** the locking pin (16) can be brought to rest - with the interposition of a jointly displaceable plate (13) provided with a first wedge face (18) - against a corresponding second wedge face (30) of the locking plate (23), wherein the wedge faces (18, 30) are arranged at an angle so as to produce a release force **(L)** directed against the holding force **(H).**

4. A device according to Claim 3, **characterized in that** the tilting axis **(K-K)** extends parallel to the axis **(A-A).**

5. A device according to Claim 3, **characterized in that** the tilting axis **(K-K)** and the axis **(A-A)** are arranged in a plane **(E-E)** extending parallel to the direction of movement **(D)** of the locking pin (16).

6. A device according to Claim 3, **characterized in that** the tilting axis **(K-K)** extends at right angles to the axis **(A-A).**

7. A device according to Claim 6, **characterized in that** the axis **(A-A)** extends perpendicularly to the direction of movement **(D)**.

8. A device according to Claim 4 or 6, **characterized in that** the locking pin (16) is displaceable manually by means of a push button (6) inside a recess (46) acting as a catching means in a slide block (45) rigid with the vehicle, wherein the recess (46) has parallel flanks.

9. A device according to Claim 8, **characterized in that** when the push button (6) is pressed into an actuated second position **(S2)** a tongue (17) of the plate (13) is present between the locking plate (23) and the clamping magnet (22) of the opened coupling (20), and the locking pin (16) is arranged disengaged from the slide block (45).

10. A device according to Claim 4 or 6, **characterized in that** the locking pin (16) is displaceable manually by means of a push button (6), and when the push button (6) is pressed into an actuated second position **(S2)** the first wedge face (18) is arranged without contact immediately adjacent the second wedge face (30), and the locking pin (16) rests against an oblique flank (50) of a recess (46) acting as a catching means in a slide block (45) fixed to the vehicle.

11. A device according to Claim 10, **characterized in that** when the selector lever (1) is pivoted about the axis **(A-A)** the locking pin (16) rests in a sliding manner against the flank (50) so as to produce the release force **(L).**

12. A device according to Claim 4 or 6, **characterized in that** when the coupling (20) is closed the locking pin (16) is held by a compression spring (52), engaging on the plate (13), in a recess (46) acting as a catching means in a slide block (45) fixed to the vehicle.

13. A device according to Claim 12, **characterized in that** a switch (51) to be actuated manually and connected to the circuit (40) by way of a line (53) is mounted on the selector lever (1), the switch (51) interrupting the flow of current to the coupling (20) in the actuated position.

## Revendications

1. Dispositif de verrouillage d'un levier de sélection (1) d'une boîte de vitesses de véhicule automobile, comportant une tige de blocage (16) à déplacer manuellement, qui est placée transversalement au levier de sélection (1) pouvant pivoter autour d'un axe (A-A), et comportant un électro-aimant, qui est relié à un circuit électronique (40) et déplace un blocage, qui bloque la tige de blocage (16) et verrouille donc le levier de sélection (1), caractérisé en ce qu'un accouplement électromagnétique (20) constitué de l'électro-aimant configuré en aimant adhérent (22), et le blocage configuré en plaque de (1) et peut pivoter avec celui-ci et en ce que dans l'état parcouru par le courant, l'aimant adhérent (22) bloque la plaque de blocage (23) et donc la tige de blocage (16), au moyen d'une force de maintien électromagnétique (H).

2. Dispositif selon la revendication 1, caractérisé en ce que la plaque de blocage (23) est placée mobile sur un axe de basculement (K-K), placé à proximité de l'aimant adhérent (22).

3. Dispositif selon la revendication 2, caractérisé en ce que la tige de blocage (16) peut être amenée en application avec une deuxième surface de coin (30) correspondante de la plaque de blocage (23), par l'intermédiaire d'une attache (13) pourvue d'une première surface de coin (18), et pouvant être déplacée conjointement, les surfaces de coin (18, 30) étant disposées en angle, et causant une force de déverrouillage (L) dirigée dans le sens contraire à la force de maintien (H).

4. Dispositif selon la revendication 3, caractérisé en ce que l'axe de basculement (K-K) est parallèle à l'axe (A-A).

5. Dispositif selon la revendication 3, caractérisé en ce que l'axe de basculement (K-K) et l'axe (A-A) sont placés dans un plan (E-E) parallèle à la direction de déplacement (D) de la tige de blocage (16).

6. Dispositif selon la revendication 3, caractérisé en ce que l'axe de basculement (K-K) est perpendiculaire à l'ace (A-A).

7. Dispositif selon la revendication 6, caractérisé en ce que l'axe (A-A) est perpendiculaire à la direction de déplacement (D).

8. Dispositif selon les revendications 4 ou 6, caractérisé en ce que la tige de blocage (16) est déplaçable manuellement au moyen d'une touche (6), à l'intérieur d'un creux (46), servant d'encoche, d'une coulisse (45) solidaire du véhicule, le creux (46) présentant des flancs parallèles.

9. Dispositif selon la revendication 8, caractérisé en ce que dans le cas où la touche (6) est actionnée, enfoncée dans une deuxième position (S2), une languette (17) de l'attache (13) se trouve entre la plaque de blocage (23) et l'aimant adhérent (22) de l'accouplement (20) ouvert, et la tige de blocage (16) est désengagée de la coulisse (45).

10. Dispositif selon les revendications 4 ou 6, caractérisé en ce que la tige de blocage (16) est déplaçable manuellement au moyen d'une touche (6) et dans le cas où la touche (6) est actionnée, enfoncée dans une deuxième position (S2), la première surface de coin (18) est placée, sans contact, directement à côté de la deuxième surface de coin (30) et la tige de blocage (16) s'applique dans ce cas contre un flanc oblique (50) d'un creux (46), servant d'encoche, d'une coulisse (45) solidaire du véhicule.

11. Dispositif selon la revendication 10, caractérisé en ce que lors du pivotement du levier de sélection (1) autour de l'axe (A-A), la tige de blocage (16) s'applique par glissement contre le flanc (50), déclenchant la force de déverrouillage (L).

12. Dispositif selon les revendications 4 ou 6, caractérisé en ce que dans le cas où l'accouplement (20) est fermé, la tige de blocage (16) est maintenue, par un ressort de pression (52), agissant sur l'attache (13), dans un creux (46), servant d'encoche, d'une coulisse (45) solidaire du véhicule.

13. Dispositif selon la revendication 12, caractérisé en ce que sur le levier de sélection (1) est placé un interrupteur (51) à actionner manuellement, relié par une ligne (53) au circuit (40), qui en position actionnée, interrompt l'arrivée du courant à l'accouplement (20).
